# FASCICULE DE BREVET EUROPEEN

(11) **EP 3 587 135 B1**
(45) Date de publication et mention de la délivrance du brevet: **25.05.2022**
(21) Numéro de dépôt: 18305476.6
(22) Date de dépôt: 18.04.2018
(51) Int. Cl.: B41M 7/00, C09D 11/101, B05D 3/06, B41J 2/21, B05D 3/02, C09D 11/38, B05D 7/00, B41J 11/00

(54) **PROCEDE D'IMPRESSION SANS CONTACT DE VERNIS-UV**
VERFAHREN ZUM KONTAKTLOSEN DRUCKEN MIT UV-LACKEN
METHOD FOR CONTACTLESS PRINTING OF UV VARNISH

(43) Date de publication de la demande: 01.01.2020
(73) Titulaire: MGI Digital Technology, 94260 Fresnes (FR)
(72) Inventeur: Abergel, Edmond, 75012 Paris (FR); Gautier le Boulch, Louis, 92190 Meudon (FR)
(74) Mandataire: De Kezel, Eric

(56) Documents cités:
- EP-A1- 2 660 067
- EP-A1- 2 682 273
- EP-A1- 2 794 126
- EP-A1- 3 070 130
- EP-A1- 3 453 463
- WO-A1-2014/207103
- WO-A1-2019/034675
- WO-A2-2010/150023
- DE-A1-102008 063 837
- DE-A1-102016 120 878
- GB-A- 2 470 067
- GB-A- 2 488 231
- US-A1- 2009 225 143
- US-A1- 2010 021 698
- US-A1- 2013 083 129

## Description

La présente invention se rapporte au domaine de l'impression de vernis-UV, en particulier au domaine de l'impression numérique de vernis-UV sans contact avec les substrats, et plus particulièrement à un procédé permettant d'imprimer à la demande un vernis brillant ou mat sur des substrats imprimables et imprimés. La présente invention se rapporte également aux substrats imprimables et imprimés, ennoblis numériquement de vernis-UV, les dits substrats comprenant des traces brillantes et mates du dit vernis-UV de composition identique.

La Demanderesse est un précurseur et leader dans l'industrialisation de l'ennoblissement numérique grâce aux améliorations continues apportées à cette technologie tant d'un point de vue équipement grâce aux évolutions mécaniques et informatiques apportées aux machines d'impression jet d'encre et à leur contrôle ainsi que d'un point de vue consommables grâce aux progrès effectués en matière de formulations et de compositions chimiques de vernis-UV.

Une demande récente du marché de l'ennoblissement numérique de documents consiste à pouvoir conférer un aspect brillant ou mat du vernis déposé sur le document/substrat. Pour pouvoir atteindre les niveaux d'effet mat désirés par les clients, il faudrait développer des formulations de vernis comprenant des charges et/ou additifs qualifiées d'agent matifiant ; hors, l'utilisation de ces charges engendre de nombreux problèmes de fiabilité de l'impression en raison des blocages intempestifs que ces charges provoquent lors du fonctionnement des têtes d'impression piézoélectriques. De plus, l'utilisation de formulations de vernis mat entraine des inconvénients additionnels dont nous citerons à titre illustratif l'obligation de prévoir des têtes d'impression additionnelles pour pouvoir alterner l'ennoblissement brillant et mat. Ainsi, à ce jour, l'ennoblissement numérique utilise soit du vernis brillant, soit du vernis mat.

Dans un autre domaine technique, à savoir celui de l'enduction de peinture ou de vernis sur des revêtements (type meubles/sols/murs), on connait une technique d'irradiation UV au moyen de lampe de type Excimère à rayonnement UV monochromatique pour régler le degré de brillance et le toucher de surface.

Ainsi, la demande DE 102006042063 (A1) décrit un procédé de réglage du niveau de brillance et du sens du toucher d'une surface décorative recouverte de peinture en soumettant successivement la peinture à un traitement de type Excimère suivi d'un durcissement de type UV et en faisant, entre autres, varier la distance et la vitesse de transport entre les deux traitements (et donc le temps de résidence). La brillance décrite dans les exemples est comprise entre 10,5 et 88,1 unités de brillant (« UB »).

EP2154184 (A1) décrit un procédé de vernissage de revêtement de sols et murs souples en PVC caractérisé en ce qu' il met en oeuvre les phases de réalisation d'un vernis mat, à le déposer en couche mince et régulière sur la structure constitutive du revêtement de sols, à pré densifier le vernis par insolation sous micro-ondes et à l'aide d'un sécheur, à exposer l'ensemble constitué pour traitement de surface par réticulation sous lampe à rayonnement monochromatique de type EXCIMER, suivi d'une seconde étape de réticulation par lampe ultraviolets. Avec ce type de procédé, EP2154184 (A1) décrit la possibilité de répondre simultanément aux objectifs suivants : donner un aspect mat (la brillance décrite dans les exemples est comprise entre 10,2 et 11,8 UB) ; offrir une résistance chimique élevée face aux taches (et notamment face aux désinfectants hospitaliers comme l'alcool iodée ou les solutions aqueuses à base d'iode) ; et offrir une souplesse adaptée à celle d'un revêtement de sol ou de mur résilient et de garantir un entretien aisé pendant la durée de vie du traitement de surface. Il est également pertinent de noter que le vernis décrit et utilisé dans EP2154184 (A1) est préparé en tant que vernis mat ; en effet, EP2154184 (A1) décrit successivement que « ... le procédé de vernissage de revêtements de sols et murs souples met en œuvre les phases de réalisation d'un vernis mat... » et que « En faisant référence à la figure 1 , le revêtement de sols avec un vernis mat non traité selon le procédé de l'invention fait apparaître la conservation des taches par dépose par exemple et non limitativement d'éosine (1), d'alcool iodé (2) ou par marqueur (3). »

On connait bien les peintures/vernis utilisés dans les domaines couverts par DE102006042063 (A1) et EP2154184 (A1) même si ces deux documents d'art antérieur n'en donnent que très peu d'informations. Ils sont en effet caractérisés par des niveaux de viscosités élevés et/ou des compositions qui sont en fait incompatibles avec l'impression numérique de vernis-UV sans contact de type jet d'encre ; ces vernis/peintures sont en effet caractérisés par des viscosités supérieures ou égale à 1 Pa.s à 25°C et/ou comprennent des polymères et/ou des oligomères avec des hautes fonctionnalités généralement supérieures à 2, voire même supérieures à 3, et/ou comprennent des charges dont la granulométrie est trop élevée. A titre illustratif, lors de la défense de leur demande EP2154184 (A1), la demanderesse a indiqué dans sa lettre datée du 13.06.2013 que « les caractéristiques du vernis utilisé dans le cadre de l'invention ne diffèrent pas particulièrement des vernis couramment utilisés dans le domaine des revêtements de sols PVC. It s'agit d'un vernis de type polyuréthane acrylate polymérisé sous l'action d'un rayonnement ultra-violet. Ce vernis est constitué d'oligomères uréthane de masse molaire supérieure à 1000g/mol dans une proportion comprise entre 30 à 40%, de monomères acrylates plurifonctionnels dans une proportion comprise entre 15 et 30%, de photo-amorceurs de type I et II dans une proportion comprise entre 2 et 8% ainsi que de charge minérale dans une proportion comprise entre 8 et 30%. Le vernis obtenu est un « vernis UV » qui se caractérise par le fait que ce vernis polymérise sous l'action d'un rayonnement ultraviolet obtenu avec de dispositifs adaptés. Ce type de formulation est connu par l'homme de l'art et fait l'objet de nombreuses publications scientifiques et commerciales. La viscosité du vernis décrit dans cette invention est comprise entre 1000 et 3000 Cps. La viscosité du vernis est ajustée à l'aide de la formulation en jouant sur la viscosité intrinsèque des oligomères, la fonctionnalité des monomères et/ou le taux de charges minérales incorporées dans le vernis. » EP2682273A1 divulgue un vernis appliqué par impression sans contact et dont on peut régler la brillance. DE102016120878A1 divulgue un procédé pour modifier l'état de surface d'un vernis pouvant être appliqué par jet d'encre. EP2794126A1 divulgue un procédé de production de revêtements mats avec une étape de durcissement par lampe excimère.

La possibilité d'utiliser un rayonnement UV monochromatique de type Excimère est aussi parfois décrite de manière générique pour le séchage des encres. Son mode de fonctionnement permet plus de flexibilité pour la formulation des encres car il permet de s'affranchir de la présence de photo-initiateurs dans les encres. Toutefois, cet avantage implique aussi qu'il faille utiliser des compositions d'encre comprenant un très grand nombre d'insaturations et des hautes fonctionnalités ce qui est incompatible avec une utilisation sereine dans le domaine de l'impression par jet d'encre et, en particulier dans le domaine de l'impression jet d'encre avec des têtes d'impression piézoélectriques qui requièrent des encres de faible viscosité. De plus, même si cet aspect ne relève pas d'une problématique technique, le cout prohibitif du matériel de rayonnement UV monochromatique de type Excimère est probablement aussi responsable du fait que son utilisation est restée très rare et/ou confidentielle dans le domaine de l'impression industrielle des encres.

### PROCÉDÉ D'IMPRESSION

La présente invention concerne un procédé d'ennoblissement d'un substrat imprimé et/ou imprimable selon la revendication 1.

### UTILISATION

La présente invention concerne également l'utilisation du procédé d'ennoblissement selon la revendication 16.

En effet, la Demanderesse a constaté qu'en utilisant ce procédé revendiqués, il était possible soit d'atteindre des niveaux d'effet mat du vernis déposé jamais atteints jusqu'ici, soit de maintenir des niveaux de brillance élevés du vernis déposé. Sans vouloir être restreint par cette explication, la Demanderesse pense que c'est l'affinité particulière du vernis-UV pour la première étape de photo-traitement UV (le photo-traitement de type diode électroluminescente (« LED » en anglais) ou le photo-traitement dans un poste de rayonnement UV conventionnel) qui a permis d'exploiter le traitement de type Excimère et donc de pouvoir ainsi atteindre des niveaux d'effet mat du vernis déposé jamais atteints en impression sans contact de vernis-UV ; cette constatation est démontrée dans les exemples particuliers qui suivent. Bien que ne voulant pas être restreint par cette explication, la Demanderesse pense que la première étape de photo-traitement UV permet d'élever les niveaux de viscosité des vernis déposés (initialement très bas) dans une gamme de valeurs qui les rend ensuite aptes à être traités de manière conforme aux objectifs de la présente invention par la technologie Excimère comme démontrés dans les exemples et les exemples comparatifs.

Les avantages de la présente invention sont donc très nombreux. Parmi ces avantages, nous citerons à titre illustratif la possibilité d'intégrer cette technologie dans les installations existantes en modifiant uniquement le poste de traitement, la réduction voire absence d'agent matant dans les compositions de vernis-UV (ces agents étant connus pour engendrer des problèmes de blocage des têtes d'impression), ainsi que la réduction drastique du nombre de vernis différents nécessaires à l'obtention d'un niveau de brillance désiré (comme illustré ci-après dans les exemples, un seul vernis permet de balayer des degrés de brillance diamétralement opposés).

### SUBSTRATS ENNOBLIS

La présente invention concerne également les substrats imprimables et imprimés, ennoblis numériquement de vernis-UV, les dits substrats comprenant des traces de brillance différentes du dit vernis-UV de composition identique.

Ainsi, comme expliqué plus en détail dans la suite de la description, ces substrats seront avantageusement caractérisés par la présence simultanée de traces ayant un niveau de brillance supérieur à 50 UB à 60° d'angle (de préférence supérieur à 90 UB, par exemple supérieur à 99 UB) ainsi que de niveau de brillance inférieur à 10 UB à 60° d'angle (par exemple inférieur à 9 UB, voire même inférieur à 6 UB).

### VERNIS-UV

Il n'y a pas de véritable restriction en matière de choix de vernis-UV utilisable dans le cadre de la présente invention. Ainsi, tout vernis-UV utilisable dans le domaine de l'impression sans contact et, plus particulièrement dans le domaine de l'impression numérique sans contact au moyen de têtes piézoélectriques, pourra avantageusement être utilisé dans le cadre de la présente invention. Le dépôt par jet d'encre est bien connu de l'homme de l'art et il peut s'opérer selon une toute technique connue de dépôt par jet d'encre, préférentiellement la technique de goutte à la demande (« drop on demand » ou « DOD » en anglais), qui consiste à former une surpression en utilisant un composant piézo-électrique qui va s'incurver sous l'effet d'une tension électrique pour réduire le volume du réservoir d'encre et ainsi éjecter une goutte de vernis.

S'il n'y a pas de véritable restriction en matière de choix de vernis-UV apte au dépôt par jet d'encre utilisable dans le cadre de la présente invention, il est néanmoins avantageux de sélectionner certaines caractéristiques afin d'utiliser des vernis permettant de sublimer les propriétés finales du vernis déposé. En cas de non-respect de ces caractéristiques, par exemple en utilisant un vernis mat comme dans EP2154184 (A1), le résultat des substrats ennoblis, dispositif et/ou procédé revendiqués sera soit impossible, soit décevant avec un aspect de surface totalement inesthétique et/ou un aspect mat non atteint et/ou un aspect brillant inatteignable.

Il est donc évident dans le cadre de la présente invention qu'on privilégiera l'utilisation de vernis-UV compatibles avec des buses à jet d'encre.

Cela implique que le choix du vernis-UV d'impression sans contact, de préférence un vernis-UV d'impression pour buses à jet d'encre (de préférence pour têtes d'impression piézoélectriques), se fera de préférence en fonction d'un ou plusieurs des critères indiqués ci-après :
- une viscosité du vernis inférieure à à 200 mPa.s à 25°C, de préférence inférieure à 100 mPa.s à 25°C, par exemple inférieure à 50 mPa.s à 25°C ; et/ou
- une absence dans le vernis de composants ayant une granulométrie supérieure ou égale à 50 µm, de préférence une absence de composants ayant une granulométrie supérieure ou égale à 10 µm, encore de préférence une absence de composants ayant une granulométrie supérieure ou égale à 1 µm. En effet, les vernis utilisés dans le cadre de la présente invention sont de préférence systématiquement filtrés afin de garantir la sécurité et le fonctionnement fiable des têtes d'impression ; et/ou
- une valeur de brillance du vernis-UV de départ supérieure à 50UB à 60° d'angle, de préférence supérieure à 90UB, par exemple supérieure à 99UB, « UB » désignant l'unité de brillance ; et/ou
- une teneur en agent matant inférieure à 5% en poids du vernis, voire une absence d'agent matant dans la composition de vernis-UV de manière à pouvoir exploiter pleinement la faculté de pouvoir imprimer du vernis mat ou brillant à la demande avec le même vernis-UV ; et/ou
- une teneur en composés pulvérulents inférieure à 0,1% en poids du vernis, voire une absence de composés pulvérulents ; et/ou
- une tension de surface du vernis comprise entre 10 mN/m et 50 mN/m à 25°C, de préférence comprise entre 18 et 25 mN/m à 25°C afin d'assurer un étalement performant sur une large gamme de substrats.

Ainsi, dans certains modes de réalisation de la présente invention, le vernis (pour recouvrir la surface d'un substrat et déposé par jet d'encre) aura une composition qui répondra de préférence à un ou plusieurs des critères indiqués ci-dessous :
- la présence d'au moins un monomère durcissable acrylate monofonctionnel ou difonctionnel, ou un mélange de deux ou plusieurs monomères durcissables acrylate monofonctionnel et/ou difonctionnel, de préférence dans une teneur supérieure à 50% en poids, par exemple dans une teneur comprise entre 60 et 85% en poids du vernis ; et/ou
- l'absence dans le vernis de composé à base d'uréthane, et/ou
- l'absence dans le vernis de monomère durcissable acrylate de seule fonctionnalité acrylate et dont la dite fonctionnalité est supérieure à 3 ; et/ou
- la présence d'un photo-initiateur, de préférence dans une teneur comprise entre 2 et 10% en poids du vernis ; et/ou
- la présence d'agent tensioactif, de préférence dans une teneur comprise entre 0,1 et 3% en poids du vernis ; et/ou
- la présence de résines passives (non réactives), de préférence dans une teneur comprise entre 5 et 20% en poids du vernis ; et/ou
- la présence d'amine modifiée acrylate, de préférence dans une teneur comprise entre 2 et 10% en poids du vernis ; et/ou
- l'absence de paillettes ; et/ou
- l'absence d'agent colorant ; et/ou
- la composition de vernis étant de préférence exempte de solvant
   o préférentiellement exempte d'eau et de solvant organique tel que, par exemple, le méthyle isobutyle cétone, le méthyle éthyle cétone, le diméthyle cétone, l'alcool isopropylique, l'alcool isobutylique, l'alcool n-butylique, l'acétate d'éthyle, l'acétate de n-butyle, l'éthyle cellosolve, le butyle cellosolve et d'autres solvants similaires.

Selon un mode de réalisation de la présente invention, la somme des composants du vernis cités ci-dessus représentera de préférence au moins 70% en poids du vernis, de préférence au moins 85% en poids, par exemple au moins 95% en poids, ou même la totalité du vernis de la présente invention.

Selon un mode opératoire préféré, mais qui n'est pas limitatif de l'invention, la détermination des paramètres physiques des composants ou de la composition du vernis-UV est opérée aux températures indiquées et dans des conditions de pressions habituelles à la surface terrestre, préférentiellement de l'ordre d'une atmosphère (1013 m Bar). C'est ainsi que la viscosité peut être mesurée à l'aide d'un viscosimètre HAAKE Viscotester 550 équipé d'un Cup NV et d'un Rotor NV qui sont des instruments de mesure connus, commercialisé par la société ThermoFisher, faisant intervenir un système de régulation de température, branché sur un bain thermostaté, qui maintient l'échantillon de vernis à une température de 25°C. De même, la tension de surface est mesurée à l'aide d'un tensiomètre DSA 1 00 avec la méthode de la goutte pendante, commercialisé par la société KRÛSS. Les granulométrie et conductivité sont respectivement mesurées à l'aide d'une part d'un appareil de mesure de taille de particules appelé MASTERSIZER 2000, commercialisé par la société MALVERN, et d'autre part d'un conductimètre CYBERSCAN CON 1 1 de EUTECH INSTRUMENTS avec une cellule de mesure de référence ECCONSEN91 W/35608-50 dont la constante de cellule est de K=1 .0.

Selon l'invention, la détermination des niveaux de brillance du vernis-UV, du vernis-UV photo-traité avant Excimère, du vernis-UV photo-traité après Excimère ou encore du vernis-UV doublement photo-traité et après séchage est effectué selon la norme DIN EN ISO 2813.

Parmi les monomères durcissables acrylate monofonctionnel pouvant avantageusement être utilisés dans les vernis selon la présente invention, on citera à titre d'exemple les monoacrylates et/ou les composés dérivés des dits monoacrylates, pris isolément ou en mélange de deux ou plusieurs des dits composés. A titre illustratif, on citera les alkyles monoacrylates aliphatiques et/ou leurs dérivés, en particulier les alkyles monoacrylates aliphatiques ayant plus de cinq atomes de carbone et/ou leurs dérivés. A titre illustratif, on citera également les alkyles monoacrylates aromatiques et/ou leurs dérivés, en particulier les alkyles monoacrylates aromatiques ayant plus de cinq atomes de carbone et/ou leurs dérivés. On citera à titre d'exemple non limitatif le 2-(2-éthoxyéthoxy) éthyle acrylate « EOEOEA », le phénol éthoxylé monoacrylate, le Cyclic Triméthylopropane Formal Acrylate « CTFA », l'octyle-décyl-acrylate « ODA » (qui a également pour propriété de restreindre les tensions de surface dans le vernis), le tridécyl acrylate « TDA », l'octyle acrylate, l'isodécyl acrylate « IDA », le 3,3,5 triméthyl cyclohexyl acrylate, l'iso octyl acrylate « IOA », l'isobornyl acrylate « IBA », le 3,3,5 triméthyl cyclohexanol acrylate « TMCHA », le tétrahydrofurfuryl acrylate « THFA », et/ou un mélange de deux ou plusieurs des dits composés précités.

Parmi les monomères durcissables diacrylate difonctionnel pouvant avantageusement être utilisés dans les vernis selon la présente invention, on citera à titre d'exemple les diacrylates et/ou les composés dérivés des dits diacrylates, pris isolément ou en mélange de deux ou plusieurs des dits composés. A titre illustratif, on citera les alkyles diacrylates aliphatiques et/ou leurs dérivés, en particulier les alkyles diacrylates aliphatiques ayant plus de cinq atomes de carbone et/ou leurs dérivés. A titre illustratif, on citera également les alkyles diacrylates aromatiques et/ou leurs dérivés, en particulier les alkyles diacrylates aromatiques ayant plus de cinq atomes de carbone et/ou leurs dérivés. On citera à titre d'exemple non limitatif le triéthylène glycol diacrylate (TIEGDA), le tripropylène glycol diacrylate (TPGDA), le dipropylène glycol diacrylate (DPGDA), le polyéthylène glycol diacrylate, le polypropylène glycol diacrylate, le propoxylated neopentylglycol diacrylate, l'hexanediol diacrylate (HDDA), l'esterdiol diacrylate (EDDA), le 3 Méthyl 1,5 pentanediol diacrylate (MPDA), le polybutadiene diacrylate (PBDDA), le decanediol diacrylate (DDDA), le tricyclodecanediméthanol diacrylate (TCDDMDA), le tetraéthylène glycol diacrylate (TTEGDA), et/ou un mélange de deux ou plusieurs des dits composés précités.

### TRAITEMENTS

La présente invention est donc caractérisée par une combinaison de plusieurs post-traitements du vernis éjecté, à savoir
- une étape de photo-traitement du vernis-UV dans un poste de rayonnement par diode électroluminescente et/ou dans un poste de rayonnement UV, et
- une étape de photo-traitement du vernis-UV photo-traité dans un poste de rayonnement par Excimère,
- une étape de séchage par rayonnement UV ou par diode électroluminescente du vernis-UV doublement photo-traité dans un poste de séchage par rayonnement UV ou par diode électroluminescente.

Le durcissement (UV) du vernis (aux UV) est un processus de photo-polymérisation qui utilise l'énergie (UV) pour transformer un liquide en solide. Lors de l'absorption de l'énergie (UV), le photo-initiateur préférentiellement présent dans le vernis produit des radicaux libres qui initient la réticulation avec les liants du vernis (monomères et/ou oligomères) dans une réaction de polymérisation pour durcir et/ou solidifier le dit vernis.

Il n'y a pas de véritable restriction en matière de choix de la première étape de photo-traitement du vernis-UV selon la présente invention. Ainsi, on sélectionnera avantageusement soit un type de rayonnement par diode électroluminescente, soit un rayonnement UV conventionnel, soit une combinaison des deux techniques dans le cadre de la présente invention. Il semble que l'importance réside dans le fait qu'une réticulation/séchage contrôlé du vernis intervienne de manière à ce que la viscosité à 25°C du dit vernis évolue de sa valeur initiale V1 vers une valeur post-traitement V2 telle que le rapport V2/V1 soit par exemple supérieur à 3 (supérieur à 10, voire supérieur à 20) ; et/ou à titre illustratif et non limitatif un rapport V2/V1 inférieur à 1000. Selon un mode d'exécution particulier qui peut être alternatif ou additionnel aux exemples de rapports de viscosité précités, la viscosité V2 à 25°C (exprimée en mPa.s) sera avantageusement supérieure au dixième de la puissance cubique de l'épaisseur ( « E » exprimée en microns) du vernis imprimé non photo-traité, soit V2 > [0,1. (E)³] ; cette condition de viscosité minimale s'est avérée particulièrement pertinente pour des vernis ayant une viscosité V1 comprise entre 5 et 100 mPa.s (par exemple entre 15 et 50 mPa.s), ainsi que pour des épaisseurs de vernis E comprises entre 5 et 50 microns (par exemple entre 8 et 30 microns). Bien que cette viscosité V2 puisse atteindre des valeurs de plusieurs dizaines de milliers de mPa.s, la Demanderesse a constaté que les avantages selon la présente invention pouvaient être obtenus avec des valeurs bien moindres de cette V2 ; ainsi, et ceci constitue un mode particulier d'exécution selon la présente invention, V2 sera inférieur à 10 Pa.s, par exemple inférieur à 1 Pa.s, voire même inférieur à 800 mPa.s.

Dans un mode particulier d'exécution selon la présente invention, mode qui n'est pas directement relié à cette caractéristique de viscosité précitée, la Demanderesse a constaté que des résultats plus avantageux pouvaient être obtenus en sélectionnant le photo-traitement LED par rapport au photo-traitement UV conventionnel.

### Rayonnement par diode électroluminescente

Il n'y a pas de véritable restriction en matière de choix de type de rayonnement par diode électroluminescente utilisable dans le cadre de la présente invention. L'importance réside dans le fait qu'une étape de photo-traitement du vernis-UV puisse être réalisée dans le poste de traitement par rayonnement par diode électroluminescente.

Comme indiqué ci-dessus, la montée en viscosité du vernis-UV sous l'action du rayonnement LED par diode électroluminescente, est un aspect critique de cette étape ; cela permet en effet de réaliser des points de crispation homogènes qui seront eux-mêmes les futurs amorceurs de l'effet généré par le traitement Excimère consécutif. Bien que la différence entre un premier photo-traitement UV conventionnel et un premier photo-traitement par diode électroluminescente soit difficile à mesurer/quantifier, en particulier en raison des épaisseurs micrométriques de la couche de vernis déposé, il semble que le photo-traitement LED apporte un avantage additionnel qui ne se remarque que par l'impact accru du traitement excimère sur la baisse des propriétés de brillance du vernis final.

On utilisera de préférence une diode électroluminescente la mieux adaptée à initier une réaction de polymérisation du vernis-UV sélectionné. A titre illustratif et non limitatif, la sélection de la diode électroluminescente se fera de préférence en fonction d'un ou plusieurs des critères indiqués ci-après :
- une énergie concentrée sur une plage étroite de longueur d'onde (de préférence inférieure à 40 nm), ce qui est assimilé à un spectre quasiment monochromatique ;
- un pic d'émission ayant une longueur d'onde comprise entre 200 et 450 nm (domaine UVC, UVB, UVA ou même visible), de préférence situé dans le domaine UVA/visible, par exemple entre 350 et 440 nm, par exemple à 365nm, 375nm ou à 395 nm ; et/ou
- une puissance de sortie des lampes LED pouvant aller jusqu'à 20 W/cm2, par exemple de 2 Watts/cm2 à 16 Watts/cm2 pour une lampe émettant à 395nm.

### Rayonnement UV (conventionnel)

Il n'y a pas de véritable restriction en matière de choix de type de rayonnement UV conventionnel (four/lampes UV) utilisable dans le cadre de la présente invention. L'importance réside dans le fait qu'une étape de photo-traitement du vernis-UV puisse être réalisée dans le poste de traitement par rayonnement UV.

Le photo-traitement par rayonnement UV, également connu dans le domaine de la présente invention par le terme durcissement aux ultraviolets (UV), est un procédé lors duquel la lumière ultraviolette et la lumière visible sont utilisées pour initier une réaction photochimique du vernis-UV qui génère une réticulation de ce vernis-UV.

Les différents types de rayons ultraviolets peuvent être classés selon les caractéristiques indiquées dans la norme ISO-21348.

Comme source de rayonnements UV, l'utilisation de lampes à vapeur de mercure est la plus répandue dans l'industrie.

Comme indiqué ci-dessus, la montée en viscosité du vernis-UV sous l'action du rayonnement UV, est un aspect critique de cette étape ; cela permet en effet de réaliser des points de crispation qui seront eux-mêmes les futurs amorceurs de l'effet généré par le traitement Excimère consécutif.

### Rayonnement par Excimère

Une caractéristique de la présente invention consiste donc à soumettre le vernis photo-traité par diode électroluminescente à un rayonnement par Excimère de manière à générer des points de crispation sur le vernis déposé. Cette génération efficace de points de crispation est rendue possible grâce à la combinaison des effets intrinsèques liés à l'utilisation du rayonnement Excimère en combinaison avec le photo-traitement préalable par rayonnement par diode électroluminescente.

Il n'y a pas de véritable restriction en matière de choix de type de rayonnement de type Excimère utilisable dans le cadre de la présente invention. On utilisera de préférence une lampe Excimère la mieux adaptée à la création des dits points de crispation sur le vernis déposé car ce sont ces points de crispation qui permettront de réguler le niveau de brillance ou de matification du vernis. L'objectif du traitement de type Excimère n'est donc pas de sécher le vernis [séchage qui, si nécessaire, est effectué selon la présente invention lors du troisième traitement par rayonnement UV ou LED tel que défini ci-après dans la description] mais bien d'effectuer un traitement de surface par réticulation additionnelle du vernis (déjà photo-traité) sous l'effet des rayonnements monochromatiques de la lampe Excimère, par exemple de lampe Excimère à base de molécules excitées de gaz rares de type Ar2^{∗}, Kr2^{∗} ou de préférence Xe2^{∗}.

A titre illustratif et non limitatif, la sélection du traitement par lampe Excimère se fera de préférence en fonction d'un ou plusieurs des critères indiqués ci-après :
- un rayonnement monochromatique VUV ou UV ou UVC, de préférence UV, par exemple à une valeur de 126, 146, 172, 175 nm, et/ou 222 nm, de préférence à 172 nm ou 222 nm;
- un traitement effectué sous atmosphère inerte, par exemple sous azote ;
- une durée de traitement par lampe Excimère inférieur à 15 secondes, par exemple inférieur à 10 secondes, voire inférieur à 5 secondes ; et/ou
- une durée de traitement par lampe Excimère supérieure à 0,2 seconde, par exemple supérieure à 0,5 seconde, voire supérieure à 1 seconde.

### Séchage optionnel

De nombreux types différents de séchages pourront avantageusement être utilisés après les étapes de photo-traitement et de rayonnement excimère revendiqués dans le cadre de la présente invention ; on citera à titre illustratif les séchages comportant un four de séchage à infrarouge (IR) et/ou à proche-infrarouge (NIR) et/ou à courant d'air chauffé, et/ou à lampe fluorescente UV et/ou un procédé photonique et/ou à diode électroluminescente.

### Séchage optionnel - Rayonnement UV (conventionnel)

Il n'y a pas de véritable restriction en matière de choix de type de rayonnement UV conventionnel (four/lampes UV) utilisable dans le cadre de la présente invention pour ce séchage optionnel. L'importance réside dans le fait qu'une étape de séchage du vernis-UV puisse être réalisée dans le poste de séchage.

Le séchage à rayonnement UV, également connu dans le domaine de la présente invention par le terme durcissement aux ultraviolets (UV), est un procédé lors duquel la lumière ultraviolette et la lumière visible sont utilisées pour initier une réaction photochimique du vernis-UV qui génère une réticulation de ce vernis-UV. Ce durcissement par UV des vernis permet de minimiser avantageusement le temps de séchage et donc de l'ennoblissement numérique du substrat tout en maintenant une compacité de l'appareillage correspondant.

Les différents types de rayons ultraviolets peuvent être classés selon les caractéristiques indiquées dans la norme ISO-21348.

Comme source de rayonnements UV, l'utilisation de lampes à vapeur de mercure est la plus répandue dans l'industrie.

### Séchage optionnel - Rayonnement par diode électroluminescente

Il n'y a pas de véritable restriction en matière de choix de type de rayonnement par diode électroluminescente utilisable dans le cadre de la présente invention. L'importance réside dans le fait qu'une étape de séchage du vernis-UV puisse être réalisée dans le poste de séchage par rayonnement par diode électroluminescente.

On utilisera de préférence une diode électroluminescente la mieux adaptée à sécher le vernis-UV sélectionné. A titre illustratif et non limitatif, la sélection de la diode électroluminescente se fera de préférence en fonction d'un ou plusieurs des critères indiqués ci-après :
- une énergie concentrée sur une plage étroite de longueur d'onde (de préférence inférieure à 40 nm), ce qui est assimilé à un spectre quasiment monochromatique ;
- un pic d'émission ayant une longueur d'onde comprise entre 200 et 450 nm (domaine UVC, UVB, UVA ou même visible), de préférence situé dans le domaine UVA/visible, par exemple entre 350 et 440 nm, par exemple à 365nm, 375nm ou à 395 nm ; et/ou
- une puissance de sortie des lampes LED pouvant aller jusqu'à 20 W/cm2, par exemple de 2 Watts/cm2 à 16 Watts/cm2 pour une lampe émettant à 395nm.

Dans un mode d'exécution particulier selon la présente invention, l'étape de séchage est présente et est caractérisée par une puissance et/ou une intensité réelle appliquée au revêtement de vernis photo-traité/excimé qui est au moins supérieure à la puissance et/ou à l'intensité réelle appliquée au revêtement de vernis lors du photo-traitement. Afin de traduire cette caractéristique de manière mesurable, reproductible et indépendante du type de photo-traitement et du type de séchage sélectionnés, le rapport des puissances P2/P1 mesurées respectivement lors du séchage (P2) et lors du photo-traitement (P1) et/ou le rapport des intensités I2/I1 mesurées respectivement lors du séchage (I2) et lors du photo-traitement (I1) satisferont de préférence les gammes de valeurs applicables indiquées dans le tableau ci-dessous. Pour les mesures, on pourra avantageusement utiliser un appareil de mesure de la puissance et de l'intensité du rayonnement UV. A titre illustratif, la Demanderesse a avantageusement utilisé un appareil de type UV Power Puck II de l'entreprise EIT Instrument markets, à savoir un radiomètre portable permettant la mesure du pic d'irradiation en Watts/cm², et la mesure de la densité énergétique en J/cm² ; le dit appareil donne les valeurs obtenues pour les 4 bandes : UVA, UVB, UVC et UVV (visible).

| | | P2/P1 | I2/I1 |
|---|---|---|---|
| Photo-traitement UV suivi de séchage UV | UVA | entre 5 et 50 | entre 5 et 50 |
| | UVB | entre 5 et 50 | entre 5 et 50 |
| | UVC | entre 5 et 50 | entre 5 et 50 |
| | UVV | entre 5 et 50 | entre 5 et 50 |
| Photo-traitement LED suivi de séchage UV | UVA | entre 10 et 100 | entre 10 et 100 |
| | UVB | non applicable | non applicable |
| | UVC | non applicable | non applicable |
| | UVV | entre 1 et 50 | entre 1 et 50 |
| Photo-traitement UV suivi de séchage LED | UVA | entre 1 et 10 | entre 1 et 10 |
| | UVB | non applicable | non applicable |
| | UVC | non applicable | non applicable |
| | UVV | entre 10 et 500 | entre 10 et 500 |
| Photo-traitement LED suivi de séchage LED | UVA | entre 50 et 100 | entre 50 et 100 |
| | UVB | non applicable | non applicable |
| | UVC | non applicable | non applicable |
| | UVV | entre 1 et 100 | entre 1 et 100 |

En utilisant le procédé revendiqué, la Demanderesse est parvenue à partir de vernis-UV dont la valeur de brillance de départ était supérieure à 50 UB (Unités de Brillant) à 60° d'angle (de préférence supérieure à 90 UB, par exemple supérieure à 99 UB) à atteindre des niveaux de brillance du vernis traité inférieurs à 10 UB à 60° d'angle (par exemple inférieurs à 9 UB, voire même inférieurs à 6 UB); à titre illustratif, une gamme de valeurs de niveaux de brillance comprise entre 2 UB et 5 UB a pu être obtenue de manière régulière et répétitive à partir d'un vernis-UV initial présentant une brillance de 100 UB. Pour rappel, selon un mode opératoire préféré, mais qui n'est pas limitatif de l'invention, la détermination des niveaux de brillance du vernis-UV, du vernis-UV photo-traité avant Excimère, du vernis-UV photo-traité après Excimère ou encore du vernis-UV doublement photo-traité et après séchage est effectué selon la norme DIN EN ISO 2813.

Ainsi, la présente invention concerne également l'utilisation du procédé d'impression revendiqué pour régler à la demande le degré de brillance du vernis-UV imprimé.

Le substrat peut être sélectionné parmi un grand nombre de matière et ne pas être considéré comme limité aux matières fréquemment utilisées dans les dispositifs standards d'impression et/ou de personnalisation/ennoblissement tels que les substrats papier, carton et plastique. On citera à titre d'exemples non limitatifs le métal, le papier, le tissu non tissé, le plastique, par exemple une résine copolymère méthacrylique, du polyester, du polycarbonate, du polyéthylène, du polypropylène, et/ou du chlorure de polyvinyle, ou même les matériaux de type cellulosique tels que, par exemple, le bois, le contreplaqué ou les matériaux cristallins tels que le verre ou les céramique, par exemple les matériaux complexes comprenant un ou plusieurs de ces composants comme par exemple les briques de lait.

Selon la présente invention, le substrat (feuille, carte, etc.) se présente généralement sous une forme rectangulaire ou carrée. Cette feuille se déplace, en général grâce à un système de transport de substrats dans une machine d'impression, le long d'un chemin de transport orienté selon un axe longitudinal depuis au moins un magasin d'entrée fournissant les substrats imprimables et/ou personnalisables, jusqu'à au moins un magasin de sortie recevant les substrats imprimés et/ou personnalisés, et donc recouverts de vernis d'ennoblissement conformément à la présente invention. Le substrat peut également se présenter sous la forme de bobine dans une machine de type bobine-bobine.

L'épaisseur finale du vernis après traitement selon la présente invention est de préférence inférieure à 200 microns. On favorisera à titre illustratif des épaisseurs de vernis inférieures à 100 microns, voire inférieures à 50 microns, c'est-à-dire des épaisseurs pour lesquelles les effets de conservation de haute brillance ou de forte matification du vernis peuvent être obtenus à la demande ; cette épaisseur finale du vernis après traitement selon la présente invention sera de préférence supérieure à 5 microns, voire supérieure à 8 microns, et/ou inférieure à 40 microns, voire inférieure à 20 microns. Un avantage considérable additionnel selon la présente invention consiste en ce qu'un même substrat puisse présenter avec le même vernis un aspect brillant ou un aspect très mat en fonction du traitement appliqué sur les zones concernées. Cette présence de différents niveaux de brillance obtenus sur un seul substrat avec un seul vernis est une avancée considérable dans la technologie d'ennoblissement ; de plus, ces effets peuvent être avantageusement obtenus en un seul passage au travers d'un dispositif d'impression et de post-traitement tel que revendiqué dans la présente invention.

La présente demande décrit diverses caractéristiques techniques et avantages en référence à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'ennoblissement d'un substrat imprimé et/ou imprimable pour régler à la demande le degré de brillance mesurée selon la norme DIN EN ISO 2813 du vernis-UV imprimé consistant en un procédé d'impression sans contact d'un vernis-UV de viscosité inférieure à 200 mPa.s mesurée à 25°C avec la méthode indiquée dans la description et comprenant au moins un monomère durcissable acrylate monofonctionnel ou difonctionnel, ou un mélange de deux ou plusieurs monomères durcissables acrylate monofonctionnel et/ou difonctionnel, dans une teneur supérieure à 50% en poids ainsi qu'un photo-initiateur sur le substrat imprimé et/ou imprimable dans un dispositif d'impression comprenant un poste d'impression sans contact du vernis-UV suivi d'un poste de traitement du vernis-UV, le dit procédé comprenant successivement
- une étape de photo-traitement du vernis-UV dans un poste de rayonnement par diode électroluminescente ou dans un poste de rayonnement UV, et
- une étape de photo-traitement du vernis-UV photo-traité dans un poste de rayonnement par Excimère, et
- une étape de séchage par rayonnement UV ou par diode électroluminescente du vernis-UV doublement photo-traité dans un poste de séchage par rayonnement UV ou par diode électroluminescente,
procédé dans lequel les traitements sont contrôlés au moyen d'un poste de contrôle et dans lequel
- le contrôle de l'étape de traitement du vernis-UV photo-traité dans le poste de rayonnement par Excimère est effectué en fonction du contrôle de l'étape de photo-traitement du vernis-UV dans le poste de rayonnement par diode électroluminescente ou UV, et
- le contrôle de l'étape de séchage par rayonnement UV ou par diode électroluminescente du vernis-UV doublement photo-traité est effectué en fonction du contrôle de l'étape de traitement du vernis-UV photo-traité dans le poste de rayonnement par Excimère et/ou en fonction du contrôle de l'étape de photo-traitement du vernis-UV dans le poste de rayonnement par diode électroluminescente ou UV.

2. Procédé d'ennoblissement selon l'une quelconque des revendications précédentes **caractérisé en ce que** le vernis-UV d'impression sans contact est sélectionné selon un ou plusieurs des critères suivants :
a) une viscosité du vernis inférieure à 100 mPa.s à 25°C, par exemple inférieure à 50 mPa.s à 25°C ; et/ou
b) une valeur de brillance du vernis-UV de départ supérieure à 50 UB à 60° d'angle, de préférence supérieure à 90 UB, par exemple supérieure à 99UB, « UB » désignant l'unité de brillance, cette brillance étant mesurée selon la norme DIN EN ISO 2813 ; et/ou
c) une tension de surface du vernis comprise entre 10 mN/m et 50 mN/m à 25°C, de préférence comprise entre 18 et 25 mN/m à 25°C afin d'assurer un étalement performant sur une large gamme de substrats.

3. Procédé d'ennoblissement selon la revendication 2 **caractérisé en ce que** le vernis-UV d'impression sans contact est sélectionné selon au moins deux des critères a) à c) de la revendication 2.

4. Procédé d'ennoblissement selon la revendication 3 **caractérisé en ce que** le vernis-UV d'impression sans contact est sélectionné selon les trois critères a) à c) de la revendication 2.

5. Procédé d'ennoblissement selon l'une quelconque des revendications précédentes **caractérisé en ce que** le vernis-UV d'impression sans contact est sélectionné selon un ou plusieurs des critères suivants :
a) l'absence dans le vernis de composé à base d'uréthane, et/ou
b) l'absence dans le vernis de monomère durcissable acrylate de seule fonctionnalité acrylate et dont la dite fonctionnalité est supérieure à 3 ; et/ou
c) la présence d'aminé modifiée acrylate, de préférence dans une teneur comprise entre 2 et 10% en poids du vernis.

6. Procédé d'ennoblissement selon la revendication 5 **caractérisé en ce que** le vernis-UV d'impression sans contact est sélectionné selon au moins deux des critères a) à c) de la revendication 5.

7. Procédé d'ennoblissement selon la revendication 5 **caractérisé en ce que** le vernis-UV d'impression sans contact est sélectionné selon au moins trois des critères a) à c) de la revendication 5.

8. Procédé d'ennoblissement selon l'une quelconque des revendications précédentes **caractérisé en ce que** le vernis-UV d'impression sans contact est sélectionné selon un ou plusieurs des critères suivants :
- une absence dans le vernis de composants ayant une granulométrie, mesurée avec la méthode indiquée dans la description, supérieure ou égale à 1 µm ; et/ou
- une absence d'agent matant dans la composition de vernis-UV ; et/ou
- une teneur en composés pulvérulents inférieure à 0,1% en poids du vernis ; et/ou
- une tension de surface du vernis comprise entre 18 et 25 mN/m mesurée à 25°C avec la méthode indiquée dans la description.

9. Procédé d'ennoblissement selon la revendication 8 **caractérisé en ce que** le vernis-UV d'impression sans contact remplit au moins deux des critères de la revendication 8.

10. Procédé d'ennoblissement selon la revendication 9 **caractérisé en ce que** le vernis-UV d'impression sans contact remplit au moins trois des critères de la revendication 8.

11. Procédé d'ennoblissement selon la revendication 10 **caractérisé en ce que** le vernis-UV d'impression sans contact remplit tous les critères de la revendication 8.

12. Procédé d'ennoblissement selon l'une quelconque des revendications précédentes **caractérisé en ce que** la puissance et/ou l'intensité réelle appliquée au revêtement de vernis photo-traité/excimé est au moins supérieure à la puissance et/ou à l'intensité réelle appliquée au revêtement de vernis lors du photo-traitement.

13. Procédé d'ennoblissement selon l'une quelconque des revendications précédentes **caractérisé en ce que** le rapport des puissances P2/P1 mesurées respectivement lors du séchage (P2) et lors du photo-traitement (P1) et/ou le rapport des intensités I2/I1 mesurées respectivement lors du séchage (I2) et lors du photo-traitement (I1) satisfont les gammes de valeurs applicables indiquées dans le tableau suivant
| | | P2/P1 | I2/I1 |
|---|---|---|---|
| Photo-traitement UV suivi de séchage UV | UVA | entre 5 et 50 | entre 5 et 50 |
| | UVB | entre 5 et 50 | entre 5 et 50 |
| | UVC | entre 5 et 50 | entre 5 et 50 |
| | UVV | entre 5 et 50 | entre 5 et 50 |
| Photo-traitement LED suivi de séchage UV | UVA | entre 10 et 100 | entre 10 et 100 |
| | UVB | non applicable | non applicable |
| | UVC | non applicable | non applicable |
| | UVV | entre 1 et 50 | entre 1 et 50 |
| Photo-traitement UV suivi de séchage LED | UVA | entre 1 et 10 | entre 1 et 10 |
| | UVB | non applicable | non applicable |
| | UVC | non applicable | non applicable |
| | UVV | entre 10 et 500 | entre 10 et 500 |
| Photo-traitement LED suivi de séchage LED | UVA | entre 50 et 100 | entre 50 et 100 |
| | UVB | non applicable | non applicable |
| | UVC | non applicable | non applicable |
| | UVV | entre 1 et 100 | entre 1 et 100 |

14. Substrat imprimable et/ou imprimé, ennobli numériquement de vernis-UV selon l'une quelconque des revendications précédentes, le dit substrat comprenant des traces de brillance mesurée selon la norme DIN EN ISO 2813 différente du dit vernis-UV de composition identique et **caractérisé par** la présence de traces ayant un niveau de brillance mesurée selon la norme DIN EN ISO 2813 supérieur à 50 UB (Unités de Brillant) à 60° d'angle ainsi que de traces ayant un niveau de brillance inférieur à 10 UB à 60° d'angle.

15. Substrat selon la revendication 13 **caractérisé par** la présence de traces ayant un niveau de brillance mesurée selon la norme DIN EN ISO 2813 supérieur à 90 UB (Unités de Brillant) à 60° d'angle, par exemple supérieur à 99 UB, ainsi que de traces ayant un niveau de brillance inférieur à 9 UB à 60° d'angle, par exemple inférieur à 6 UB.

16. Utilisation du procédé d'ennoblissement revendiqué selon l'une quelconque des revendications 1 à 13 pour régler à la demande le degré de brillance mesurée selon la norme DIN EN ISO 2813 du vernis-UV imprimé.

## Patentansprüche

1. Verfahren zum Veredeln eines bedruckten und/oder bedruckbaren Substrats, um den nach der Norm DIN EN ISO 2813 gemessenen Glanzgrad des gedruckten UV-Lacks entsprechend der Anforderung einzustellen, bestehend aus einem Verfahren zum kontaktlosen Drucken mit einem UV-Lack mit einer Viskosität von weniger als 200 mPa.s, gemessen bei 25 °C mit der in der Beschreibung angegebenen Methode, und umfassend mindestens ein härtbares monofunktionelles oder bifunktionelles Acrylatmonomer oder eine Mischung aus zwei oder mehr härtbaren monofunktionellen und/oder bifunktionellen Acrylatmonomeren in einem Gehalt von mehr als 50 Gew.-% sowie einen Photoinitiator auf dem bedruckten und/oder bedruckbaren Substrat, in einer Druckvorrichtung, die eine Station zum kontaktlosen Drucken mit UV-Lack gefolgt von einer Station zur Behandlung des UV-Lacks umfasst, wobei das Verfahren nacheinander umfasst
- einen Schritt der Photobehandlung des UV-Lacks in einer Leuchtdiodenstrahlungsstation oder in einer UV-Strahlungsstation und
- einen Schritt der Photobehandlung des photobehandelten UV-Lacks in einer Excimer-Strahlungsstation und
- einen Schritt des Trocknens durch UV- oder Leuchtdiodenstrahlung des zweifach photobehandelten UV-Lacks in einer UV- oder Leuchtdiodenstrahlungstrocknungsstation,
wobei bei dem Verfahren die Behandlungen mittels einer Steuerstation gesteuert werden und
- die Steuerung des Schritts der Behandlung des photobehandelten UV-Lacks in der Excimer-Strahlungsstation in Abhängigkeit von der Steuerung des Schritts der Photobehandlung des UV-Lacks in der Leuchtdioden- oder UV-Strahlungsstation erfolgt und
- die Steuerung des Schritts des Trocknens durch UV- oder Leuchtdiodenstrahlung des zweifach photobehandelten UV-Lacks in Abhängigkeit von der Steuerung des Schritts der Behandlung des photobehandelten UV-Lacks in der Excimer-Strahlungsstation und/oder in Abhängigkeit von der Steuerung des Schritts der Photobehandlung des UV-Lacks in der Leuchtdioden- oder UV-Strahlungsstation erfolgt.

2. Veredelungsverfahren nach einem der vorhergehenden Ansprüche, **dadurch gekennzeichnet, dass** der UV-Lack zum kontaktlosen Drucken nach einem oder mehreren der folgenden Kriterien ausgewählt wird:
a) eine Viskosität des Lacks von weniger als 100 mPa.s bei 25 °C, beispielsweise weniger als 50 mPa.s bei 25 °C; und/oder
b) ein Glanzwert des Ausgangs-UV-Lacks von mehr als 50 GU in einem Winkel von 60°, bevorzugt von mehr als 90 GU, beispielsweise mehr als 99 GU, wobei "GU" die Glanzeinheit bezeichnet, wobei dieser Glanz nach der Norm DIN EN ISO 2813 gemessen wird; und/oder
c) eine Oberflächenspannung des Lacks zwischen 10 mN/m und 50 mN/m bei 25 °C, bevorzugt zwischen 18 und 25 mN/m bei 25 °C, um eine leistungsfähige Ausbreitung auf einer breiten Palette von Substraten zu gewährleisten.

3. Veredelungsverfahren nach Anspruch 2, **dadurch gekennzeichnet, dass** der UV-Lack zum kontaktlosen Drucken nach mindestens zwei der Kriterien a) bis c) des Anspruchs 2 ausgewählt wird.

4. Veredelungsverfahren nach Anspruch 3, **dadurch gekennzeichnet, dass** der UV-Lack zum kontaktlosen Drucken nach den drei Kriterien a) bis c) des Anspruchs 2 ausgewählt wird.

5. Veredelungsverfahren nach einem der vorhergehenden Ansprüche, **dadurch gekennzeichnet, dass** der UV-Lack zum kontaktlosen Drucken nach einem oder mehreren der folgenden Kriterien ausgewählt wird:
a) Nichtvorkommen von Verbindungen auf Urethanbasis im Lack und/oder
b) Nichtvorkommen von härtbarem Acrylatmonomer, das eine einzige Acrylatfunktionalität hat und dessen Funktionalität größer als 3 ist, im Lack; und/oder
c) Vorkommen von modifiziertem Acrylatamin, bevorzugt in einem Gehalt zwischen 2 und 10 Gew.-% des Lacks.

6. Veredelungsverfahren nach Anspruch 5, **dadurch gekennzeichnet, dass** der UV-Lack zum kontaktlosen Drucken nach mindestens zwei der Kriterien a) bis c) des Anspruchs 5 ausgewählt wird.

7. Veredelungsverfahren nach Anspruch 5, **dadurch gekennzeichnet, dass** der UV-Lack zum kontaktlosen Drucken nach mindestens drei der Kriterien a) bis c) des Anspruchs 5 ausgewählt wird.

8. Veredelungsverfahren nach einem der vorhergehenden Ansprüche, **dadurch gekennzeichnet, dass** der UV-Lack zum kontaktlosen Drucken nach einem oder mehreren der folgenden Kriterien ausgewählt wird:
- ein Nichtvorkommen im Lack von Bestandteilen mit einer Partikelgröße, gemessen mit der in der Beschreibung angegebenen Methode, von 1 µm oder mehr; und/oder
- ein Nichtvorkommen von Mattierungsmittel in der UV-Lack-Zusammensetzung; und/oder
- ein Gehalt an pulverförmigen Verbindungen von weniger als 0,1 Gew.-% des Lacks; und/oder
- eine Oberflächenspannung des Lacks zwischen 18 und 25 mN/m, gemessen bei 25 °C mit der in der Beschreibung angegebenen Methode.

9. Veredelungsverfahren nach Anspruch 8, **dadurch gekennzeichnet, dass** der UV-Lack zum kontaktlosen Drucken mindestens zwei der Kriterien des Anspruchs 8 erfüllt.

10. Veredelungsverfahren nach Anspruch 9, **dadurch gekennzeichnet, dass** der UV-Lack zum kontaktlosen Drucken mindestens drei der Kriterien des Anspruchs 8 erfüllt.

11. Veredelungsverfahren nach Anspruch 10, **dadurch gekennzeichnet, dass** der UV-Lack zum kontaktlosen Drucken alle Kriterien des Anspruchs 8 erfüllt.

12. Veredelungsverfahren nach einem der vorhergehenden Ansprüche, **dadurch gekennzeichnet, dass** die Leistung und/oder die Iststromstärke, die auf den photobehandelten/excimerbestrahlten Lacküberzug angewandt wird, mindestens größer als die Leistung und/oder die Iststromstärke ist, die bei der Photobehandlung auf den Lacküberzug angewandt wird.

13. Veredelungsverfahren nach einem der vorhergehenden Ansprüche, **dadurch gekennzeichnet, dass** das Verhältnis der Leistungen P2/P1, die jeweils beim Trocknen (P2) und bei der Photobehandlung (P1) gemessen werden, und/oder das Verhältnis der Stromstärken I2/I1, die jeweils beim Trocknen (I2) und bei der Photobehandlung (I1) gemessen werden, die geltenden Wertebereiche erfüllen, die in der folgenden Tabelle angegeben werden
| | | P2/P1 | I2/I1 |
|---|---|---|---|
| UV-Photobehandlung gefolgt von UV-Trocknung | UVA | zwischen 5 und 50 | zwischen 5 und 50 |
| | UVB | | |
| | UVC | zwischen 5 und 50 | zwischen 5 und 50 |
| | UVV | zwischen 5 und 50 | zwischen 5 und 50 |
| | | zwischen 5 und 50 | zwischen 5 und 50 |
| LED-Photobehandlung gefolgt von UV-Trocknung | UVA | zwischen 10 und 100 entfällt | zwischen 10 und 100 entfällt |
| | UVB | | |
| | UVC | | |
| | UVV | entfällt zwischen 1 und 50 | entfällt zwischen 1 und 50 |
| UV-Photobehandlung gefolgt von LED-Trocknung | UVA | zwischen 1 und 10 entfällt | zwischen 1 und 10 entfällt |
| | UVB | | |
| | UVC | | |
| | UVV | entfällt zwischen 10 und 500 | entfällt zwischen 10 und 500 |
| LED-Photobehandlung gefolgt von LED-Trocknung | UVA | zwischen 50 und 100 entfällt | zwischen 50 und 100 entfällt |
| | UVB | | |
| | UVC | | |
| | UVV | entfällt zwischen 1 und 100 | entfällt zwischen 1 und 100 |

14. Bedruckbares und/oder bedrucktes Substrat, das digital mit einem UV-Lack nach einem der vorhergehenden Ansprüche veredelt ist, wobei das Substrat Spuren von nach der Norm DIN EN ISO 2813 gemessenem Glanz umfasst, der verschieden von dem UV-Lack mit identischer Zusammensetzung ist, und durch das Vorkommen von Spuren gekennzeichnet ist, die ein nach der Norm DIN EN ISO 2813 gemessenes Glanzniveau von mehr als 50 GU (Glanzeinheiten) bei einem Winkel von 60° haben, sowie von Spuren, die ein Glanzniveau von weniger als 10 GU bei einem Winkel von 60° haben.

15. Substrat nach Anspruch 13, **gekennzeichnet durch** das Vorkommen von Spuren, die ein nach der Norm DIN EN ISO 2813 gemessenes Glanzniveau von mehr als 90 GU (Glanzeinheiten) bei einem Winkel von 60°, beispielsweise von mehr als 99 GU, haben, sowie von Spuren, die ein Glanzniveau von weniger als 9 GU bei einem Winkel von 60°, beispielsweise von weniger als 6 GU, haben.

16. Verwendung des beanspruchten Veredelungsverfahrens nach einem der Ansprüche 1 bis 13, um den nach der Norm DIN EN ISO 2813 gemessenen Glanzgrad des gedruckten UV-Lacks entsprechend der Anforderung einzustellen.

## Claims

1. Process for the finishing of a printed and/or printable substrate for adjusting, as required, the degree of gloss, measured according to Standard DIN EN ISO 2813, of the printed UV varnish, consisting of a process for the contactless printing of a UV varnish with a viscosity less than 200 mPa.s, measured at 25°C, with the method indicated in the description and comprising at least one curable monofunctional or difunctional acrylate monomer or a mixture of two or more curable monofunctional and/or difunctional acrylate monomers in a content of greater than 50% by weight and also a photoinitiator, on the printed and/or printable substrate in a printing device comprising a station for the contactless printing of the UV varnish, followed by a station for the treatment of the UV varnish, said process successively comprising:
- a stage of phototreatment of the UV varnish in a light-emitting diode radiation station or in a UV radiation station,
- a stage of phototreatment of the phototreated UV varnish in an excimer radiation station, and
- a stage of drying by UV radiation or by light-emitting diode radiation of the doubly phototreated UV varnish in a UV radiation or light-emitting diode radiation drying station, in which process the treatments are controlled by means of a control station and in which process:
- the control of the stage of treatment of the phototreated UV varnish in the excimer radiation station is carried out as a function of the control of the stage of phototreatment of the UV varnish in the light-emitting diode radiation or UV radiation station, and
- the control of the stage of drying by UV radiation or light-emitting diode radiation of the doubly phototreated UV varnish is carried out as a function of the control of the stage of treatment of the phototreated UV varnish in the excimer radiation station and/or as a function of the control of the stage of phototreatment of the UV varnish in the light-emitting diode radiation or UV radiation station.

2. Finishing process according to any one of the preceding claims, **characterized in that** the contactless printing UV varnish is selected according to one or more of the following criteria:
a) a viscosity of the varnish of less than 100 mPa.s at 25°C, for example of less than 50 mPa.s at 25°C; and/or
b) a gloss value of the starting UV varnish of greater than 50 GU at an angle of 60°, preferably of greater than 90 GU, for example of greater than 99 GU, "GU" denoting the gloss unit, this gloss being measured according to Standard DIN EN ISO 2813; and/or
c) a surface tension of the varnish of between 10 mN/m and 50 mN/m at 25°C, preferably of between 18 and 25 mN/m at 25°C, in order to ensure effective spreading over a wide range of substrates.

3. Finishing process according to Claim 2, **characterized in that** the contactless printing UV varnish is selected according to at least two of the criteria a) to c) of Claim 2.

4. Finishing process according to Claim 3, **characterized in that** the contactless printing UV varnish is selected according to the three criteria a) to c) of Claim 2.

5. Finishing process according to any one of the preceding claims, **characterized in that** the contactless printing UV varnish is selected according to one or more of the following criteria:
a) the absence in the varnish of a urethane-based compound, and/or
b) the absence in the varnish of a curable acrylate monomer of acrylate functionality alone and said functionality of which is greater than 3; and/or
c) the presence of an acrylate-modified amine, preferably in a content of between 2% and 10% by weight of the varnish.

6. Finishing process according to Claim 5, **characterized in that** the contactless printing UV varnish is selected according to at least two of the criteria a) to c) of Claim 5.

7. Finishing process according to Claim 5, **characterized in that** the contactless printing UV varnish is selected according to at least three of the criteria a) to c) of Claim 5.

8. Finishing process according to any one of the preceding claims, **characterized in that** the contactless printing UV varnish is selected according to one or more of the following criteria:
- an absence in the varnish of components having a particle size, measured with the method indicated in the description, of greater than or equal to 1 µm; and/or
- an absence of a matting agent in the UV varnish composition; and/or
- a content of pulverulent compounds of less than 0.1% by weight of the varnish; and/or
- a surface tension of the varnish of between 18 and 25 mN/m, measured at 25°C with the method indicated in the description.

9. Finishing process according to Claim 8, **characterized in that** the contactless printing UV varnish meets at least two of the criteria of Claim 8.

10. Finishing process according to Claim 9, **characterized in that** the contactless printing UV varnish meets at least three of the criteria of Claim 8.

11. Finishing process according to Claim 10, **characterized in that** the contactless printing UV varnish meets all the criteria of Claim 8.

12. Finishing process according to any one of the preceding claims, **characterized in that** the real power and/or intensity applied to the phototreated/excimer-treated varnish coating is at least greater than the real power and/or intensity applied to the varnish coating during the phototreatment.

13. Finishing process according to any one of the preceding claims, **characterized in that** the ratio of the powers P2/P1 respectively measured during the drying (P2) and during the phototreatment (P1) and/or the ratio of the intensities I2/I1 restrictively measured during the drying (12) and during the phototreatment (I1) satisfy the applicable value ranges indicated in the following table:
| | | P2/P1 | I2/I1 |
|---|---|---|---|
| UV phototreatment, followed by UV drying | UVA | Between 5 and 50 | Between 5 and 50 |
| | UVB | Between 5 and 50 | Between 5 and 50 |
| | UVC | Between 5 and 50 | Between 5 and 50 |
| | UVV | Between 5 and 50 | Between 5 and 50 |
| LED phototreatment, followed by UV drying | UVA | Between 10 and 100 | Between 10 and 100 |
| | UVB | Not applicable | Not applicable |
| | UVC | Not applicable | Not applicable |
| | UVV | Between 1 and 50 | Between 1 and 50 |
| UV phototreatment, followed by LED drying | UVA | Between 1 and 10 | Between 1 and 10 |
| | UVB | Not applicable | Not applicable |
| | UVC | Not applicable | Not applicable |
| | UVV | Between 10 and 500 | Between 10 and 500 |
| LED phototreatment, followed by LED drying | UVA | Between 50 and 100 | Between 50 and 100 |
| | UVB | Not applicable | Not applicable |
| | UVC | Not applicable | Not applicable |
| | UVV | Between 1 and 100 | Between 1 and 100 |

14. Printable and/or printed substrate, finished digitally with UV varnish according to any one of the preceding claims, said substrate comprising traces of gloss, measured according to Standard DIN EN ISO 2813, which is different from said UV varnish of identical composition and **characterized by** the presence of traces having a level of gloss, measured according to Standard DIN EN ISO 2813, of greater than 50 GU (Gloss Units) at an angle of 60°, and also traces having a level of gloss of less than 10 GU at an angle of 60°.

15. Substrate according to Claim 13, **characterized by** the presence of traces having a level of gloss, measured according to Standard DIN EN ISO 2813, of greater than 90 GU (Gloss Units) at an angle of 60°, for example of greater than 99 GU, and also traces having a level of gloss of less than 9 GU at an angle of 60°, for example of less than 6 GU.

16. Use of the claimed finishing process according to any one of Claims 1 to 13 for adjusting, as required, the degree of gloss, measured according to Standard DIN EN ISO 2813, of the printed UV varnish.
